# EUROPÄISCHE PATENTANMELDUNG

(11) **EP 4 432 608 A1**
(43) Veröffentlichungstag der Anmeldung: **18.09.2024**
(21) Anmeldenummer: 24163344.5
(22) Anmeldetag: 13.03.2024
(51) Int. Cl.: H04L 9/40, H04W 4/02, H04W 12/80

(54) **KOMBINATION VON GEOGRAPHISCHER INFORMATION ZUR ABLEITUNG EINER BEDROHUNGSLAGE DURCH EINE VORRICHTUNG EINER FORMATION**

(30) Priorität: 13.03.2023 DE 102023106209
(71) Anmelder: Airbus Defence and Space GmbH, 82024 Taufkirchen (DE)
(72) Erfinder: MIEHE, Fabian, 82024 Taufkirchen (DE); NAGEL, Stefan, 82024 Taufkirchen (DE); AVERHOFF, Kay, 82024 Taufkirchen (DE); ZELL, Johannes, 82024 Taufkirchen (DE)
(74) Vertreter: Isarpatent

(57) **Zusammenfassung**

Die vorliegende Erfindung betrifft ein Verfahren zur militärischen Aufklärung in einem Gebiet, das folgende Schritte umfasst: Erfassen von ersten geographischen Daten über ein erstes Gebiet in dem Gebiet; Erfassen von ersten Daten über eine militärische Vorrichtung eines ersten Typs; und Bestimmen einer Verteilung einer Wahrscheinlichkeit, die militärische Vorrichtung des ersten Typs an einer Position in dem ersten Gebiet zu finden, basierend auf den erfassten Daten.

## Beschreibung

### TECHNISCHES GEBIET DER ERFINDUNG

Die vorliegende Erfindung betrifft Verfahren zur Verarbeitung von Daten zur Bestimmung einer Wahrscheinlichkeit einer Präsenz einer Vorrichtung an einer geographischen Position. Insbesondere betrifft die vorliegende Erfindung Verfahren zur Ableitung einer Bedrohungslage basierend auf den bestimmten geographischen Positionen der Vorrichtungen einer militärischen Formation oder eines militärischen Systems und den Fähigkeiten der Vorrichtungen an den bestimmten Positionen.

### HINTERGRUND DER ERFINDUNG

Zur Beurteilung einer Bedrohungslage für die Planung und Durchführung einer militärischen Operation werden im Rahmen der militärischen Aufklärung Daten gesammelt und analysiert, um Informationen zu erhalten, die für ein Erreichen von Zielen der Operation bedeutsam sind.

Zu den Mitteln der militärischen Aufklärung gehört die elektronische Aufklärung (Signal Intelligence, SIGINT), bei der Daten durch Abfangen und Entschlüsseln von elektronischen Signalen wie Funk- und Satellitenkommunikation erfasst werden. Ein weiteres Mittel der militärischen Aufklärung ist die Luft- und Satellitenaufklärung (Imagery Intelligence, IMINT), bei der Daten in Luft- und Satellitenbildern erfasst werden. Die militärische Aufklärung kann sich aber auch gesammelter technischer Daten, wie bspw. Radar-, Lidar-, Sonarsignaturen, usw. (Measurement and Signature Intelligence, MASINT) oder öffentlich zugänglicher Daten (Open Source Intelligence, OSINT) bedienen, wie beispielsweise Daten über den Aufbau von militärischen Formationen und/oder militärischen Systemen, wie Luftabwehrsystemen, um Informationen zu erhalten, die für ein Erreichen von Zielen einer Operation bedeutsam sind.

Bei der modernen militärischen Aufklärung kommen auch Drohnen oder andere kleinere Aufklärungsmittel mit Sensoren zum Einsatz oder es werden Daten von Sensoren erfasst und gesammelt, die auf bodengestützten Einsatzfahrzeugen montiert sind.

Die Kombination der gewonnenen Daten zur Gewinnung von plausiblen Informationen stellt dabei eine Herausforderung dar.

### ZUSAMMENFASSUNG DER ERFINDUNG

Erfindungsgemäß wird die obige Aufgabe gelöst durch ein Verfahren mit den Merkmalen des Patentanspruchs 1.

Gemäß einem Aspekt der Erfindung umfasst ein Verfahren zur militärischen Aufklärung in einem Gebiet ein Erfassen von ersten geographischen Daten über ein erstes Gebiet in dem Gebiet; ein Erfassen von ersten Daten über eine militärische Vorrichtung eines ersten Typs; und ein Bestimmen einer Verteilung einer Wahrscheinlichkeit, die militärische Vorrichtung des ersten Typs an einer Position in dem ersten Gebiet zu finden, basierend auf den erfassten Daten.

Eine der vorliegenden Erfindung zugrundeliegende Idee besteht darin, basierend auf den gewonnen, kombinierten Daten, automatisch Information bereitzustellen, die über eine erhöhte Plausibilität verfügen. Der Einsatz von bemannten und/oder unbemannten Einheiten in einem Einsatzgebiet kann dadurch verbessert werden, bspw. indem Gebiete, in denen eine erhöhte Bedrohungslage herrscht, umgangen werden, bspw. durch Gebiete in denen eine geringe Bedrohungslage herrscht, weil bspw. Attrappen von echten Bedrohungen unterschieden werden können.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung umfasst ein Verfahren ein Erhalten einer Information, dass eine erste militärische Vorrichtung des ersten Typs an einer bestimmten Position in dem ersten Gebiet sei. Diese Information ermöglicht einen Abgleich mit der Verteilung der Wahrscheinlichkeit, die militärische Vorrichtung des ersten Typs an der Position in dem ersten Gebiet zu finden.

Gemäß einer Weiterbildung umfasst ein Verfahren ein Bestimmen einer Plausibilität der erhaltenen Information basierend auf der Verteilung der Wahrscheinlichkeit, die militärische Vorrichtung des ersten Typs an der Position in dem ersten Gebiet zu finden. Dieser Schritt ermöglicht ein Verifizieren der erhaltenen Information.

Gemäß einer Weiterbildung umfasst ein Verfahren ein Bestimmen einer Bedrohungslage in dem Gebiet, basierend auf den erfassten Daten und der bestimmten Plausibilität der erhaltenen Information. Dieser Schritt ermöglicht es eine plausible Bedrohungslage zu generieren, welche die wahre Bedrohungslage mit einer erhöhten Wahrscheinlichkeit wiedergibt.

Gemäß einer Weiterbildung umfasst ein Verfahren ein Erfassen von zweiten geographischen Daten über ein zweites Gebiet in dem Gebiet. Dieser Schritt ermöglicht es die Bedrohungslage auf weitere Vorrichtungen zu erweitern.

Gemäß einer Weiterbildung umfasst ein Verfahren ein Erfassen von zweiten Daten über eine militärische Vorrichtung eines zweiten Typs. Dieser Schritt ermöglicht es die Bedrohungslage auf weitere Vorrichtungen zu erweitern, unter Berücksichtigung der Fähigkeiten der militärischen Vorrichtung des zweiten Typs.

Gemäß einer Weiterbildung umfasst ein Verfahren ein Bestimmen einer Verteilung einer Wahrscheinlichkeit, die militärische Vorrichtung des zweiten Typs an einer Position in dem zweiten Gebiet zu finden, basierend auf den erfassten Daten. Dieser Schritt ermöglicht es die Bedrohungslage auf weitere Vorrichtungen und Gebiete zu erweitern.

Gemäß einer Weiterbildung umfasst ein Verfahren ein Erfassen von Daten über eine militärische Formation oder ein militärisches System, wobei die militärische Vorrichtung des ersten Typs und die militärische Vorrichtung des zweiten Typs Vorrichtungen der militärischen Formation oder des militärischen Systems sind. Hierdurch können Daten über eine militärische Formation oder ein militärisches System mit anderen erfassten Daten verknüpft werden, um die Bedrohungslage zu präzisieren.

Gemäß einer Weiterbildung umfasst ein Verfahren ein Erhalten einer Information, dass die militärische Formation oder das militärische System in dem Gebiet sei; ein Bestimmen einer Plausibilität der erhaltenen Information umfassen, basierend auf der Verteilung der Wahrscheinlichkeit, die militärische Vorrichtung des ersten Typs an der Position in dem erstes Gebiet zu finden, und basierend auf der Verteilung der Wahrscheinlichkeit, die militärische Vorrichtung des zweiten Typs an der Position in dem zweiten Gebiet zu finden; und ein Bestimmen einer Bedrohungslage in dem Gebiet umfassen, basierend auf den erfassten Daten und der bestimmten Plausibilität der erhaltenen Information. Hierdurch kann eine präzise und plausible Bedrohungslage bereitgestellt werden, um die Ziele einer Operation besser zu erreichen.

Gemäß einem Aspekt der Erfindung umfasst ein nicht-flüchtiges computerlesbares Speichermedium einen darauf gespeicherten Programmcode, welcher, wenn er durch ein System mit einem oder mit mehreren lokalen oder verteilten Prozessoren durchgeführt wird, das System dazu veranlasst ein Verfahren zur militärischen Aufklärung in einem Gebiet durchzuführen, wie es nachfolgend im Detail beschrieben ist.

### KURZBESCHREIBUNG DER ZEICHNUNGEN

Im Folgenden wird die Erfindung unter Bezugnahme auf die Figuren der Zeichnungen erläutert.
- Fig. 1: zeigt eine schematische Darstellung von unterschiedlichen geographischen Daten in einem Gebiet A und eine daraus abgeleitete Heatmap, welche eine Verteilung einer Wahrscheinlichkeit veranschaulicht eine militärische Vorrichtung eines Typs an einer Position in dem Gebiet A zu finden.
- Fig. 2: zeigt eine schematische Darstellung von Heatmaps für zwei militärische Vorrichtungen einer Formation in verschiedenen Gebieten A und B und die daraus abgeleitete Bedrohungslage in einem Gebiet C, das die Gebiete A und B zumindest teilweise umfasst.
- Fig. 3: zeigt eine schematische Darstellung eines Vergleichs einer von einem Sensor erfassten Position einer militärischen Vorrichtung mit der Heatmap für diese militärische Vorrichtung in einem Gebiet B zum Bestimmen einer Plausibilität einer Information, dass sich die Vorrichtung an der von den Sensoren erfassten Position in dem Gebiet B befinde.
- Fig. 4: zeigt eine schematische Darstellung eines Verfahrens zum militärischen Aufklärung in einem Gebiet, welches ein Bestimmen einer Bedrohungslage in dem Gebiet basierend auf einer Heatmap ermöglicht.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist -jeweils mit denselben Bezugszeichen versehen.

### AUSFÜHRLICHE BESCHREIBUNG VON AUSFÜHRUNGSBEISPIELEN DER ERFINDUNG

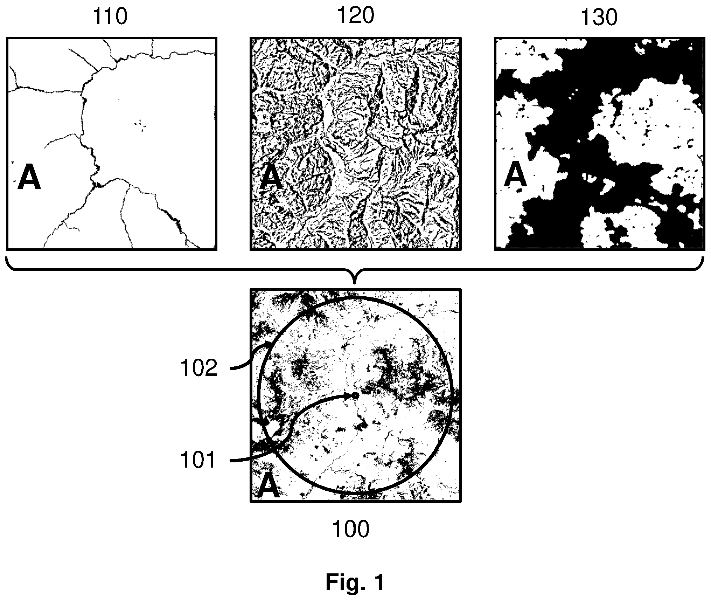

Fig. 1 zeigt eine schematische Darstellung von unterschiedlichen geographischen Daten 110 bis 130 in einem Gebiet A und eine daraus abgeleitete Heatmap 100, welche eine Verteilung einer Wahrscheinlichkeit veranschaulicht eine militärische Vorrichtung eines Typs an einer Position in dem Gebiet A zu finden.

Die geographischen Daten können Gewässertiefen 110, Steigungen 120, Bodenbeschaffenheit / Zugänglichkeit 130 wie bspw. Bodenhärte, Tragfähigkeit, Straßendaten wie Krümmungsradien, Straßenbreite, Straßensteigung, Straßenkategorie usw. sein. Zur Ableitung einer Heatmap 100 können alle geographischen Daten herangezogen werden, welche für eine Positionierung einer militärischen Vorrichtung eines bestimmten Typs von Bedeutung sind.

Basierend auf den herangezogen geographischen Daten kann eine Verteilung der Wahrscheinlichkeit die militärische Vorrichtung an einer Position in dem Gebiet A zu finden bestimmt werden. Es kann möglich sein die wahrscheinlichste Position 101 der militärischen Vorrichtung des bestimmten Typs in dem Gebiet A zu bestimmen. Aus ein Einsatzradius oder Wirkungsbereich 102 der militärischen Vorrichtung kann die Bedrohungslage in dem Gebiet A abgeleitet werden. Zur Bestimmung der Heatmap können auch Daten über die militärische Vorrichtung herangezogen werden, wie bspw. deren räumlichen Dimensionen - Länge, Breite, Höhe -, deren Gewicht, Wenderadius usw. Insbesondere können die Daten über die militärische Vorrichtung in Beziehung zu den geographischen Daten gesetzt werden, wie bspw. Tragfähigkeit, Breite, Neigung und Radius von Straßen, Boden, Wassertiefe usw.

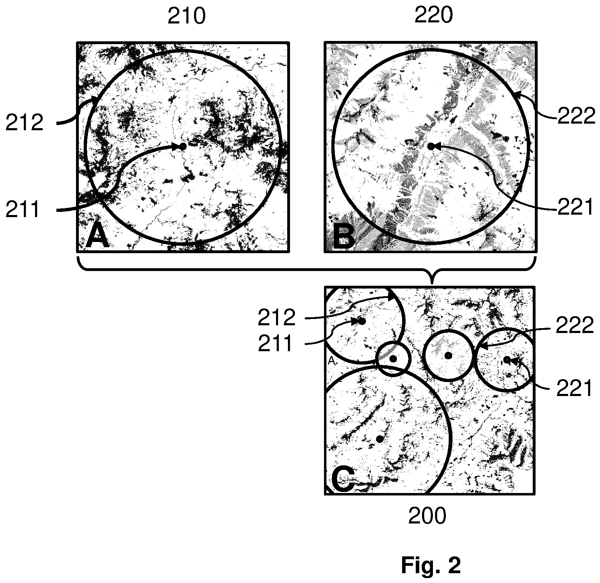

Wie in Fig. 2 gezeigt können zur Bestimmung einer Bedrohungslage auch Daten über militärischen Formation und/oder Systeme herangezogen werden, die aus mehreren Vorrichtungen gleichen oder unterschiedlichen Typs zusammengesetzt oder aufgebaut sind. Beispiele von solchen militärischen Formationen sind Panzer-, Artillerie- und/oder Marineverbände mit einer oder mit mehreren Fregatten. Beispiele von militärischen Systemen sind Boden-Luft-Raketen-Systeme (surfaceto-air missile system, SAMS) oder integrierte Luftverteidigungssysteme (integrated air defense systems, IADS). Integrierte Luftverteidigungssysteme bestehen in der Regel aus mehreren Teilsystemen, wie Gefechtsstand, Radar, Raketenwerfer usw., die als Gesamtsystem in einem größeren Gebiet positioniert werden können.

Teilsysteme sind in der Regel disloziert. Ferner gibt es Einschränkungen zwischen den Teilsystemen, bspw. kann eine Verbindung über Funk erforderlich sein, oder es kann ein Erfordernis bestehen, dass zwischen zwei Teilsystemen eine Sichtlinie besteht, bspw. für optische Datenverbindungen usw.

Fig. 2 zeigt eine schematische Darstellung von Heatmaps für zwei militärischen Vorrichtungen einer militärischen Formation oder eines militärischen Systems in verschiedenen Gebieten A und B und die daraus abgeleitete Bedrohungslage in einem Gebiet C, das die Gebiete A und B zumindest teilweise umfasst.

Die Heatmap 210 veranschaulicht eine Verteilung einer Wahrscheinlichkeit eine erste militärische Vorrichtung eines ersten Typs an einer Position in dem Gebiet A zu finden. Das Bezugszeichen 211 bezeichnet beispielhaft die wahrscheinlichste Position der ersten militärischen Vorrichtung in dem Gebiet A, während das Bezugszeichen 212 beispielhaft den Einsatzradius oder den Wirkungsbereich der ersten militärischen Vorrichtung in dem Gebiet A bezeichnet.

Die Heatmap 220 veranschaulicht eine Verteilung einer Wahrscheinlichkeit eine zweite militärische Vorrichtung eines zweiten Typs an einer Position in dem Gebiet B zu finden. Das Bezugszeichen 221 bezeichnet beispielhaft die wahrscheinlichste Position der zweiten militärischen Vorrichtung in dem Gebiet B, während das Bezugszeichen 222 beispielhaft den Einsatzradius oder den Wirkungsbereich der zweiten militärischen Vorrichtung in dem Gebiet B bezeichnet.

Der erste Typ und der zweite Typ können identisch sein. Die erste militärische Vorrichtung und die zweite militärische Vorrichtung können Teil einer Formation oder eines Systems sein, wie in der Bedrohungslage 200 veranschaulicht. Zur Bestimmung der Bedrohungslage 200 können neben den bereits oben erwähnten geographischen Daten und Daten über militärische Vorrichtungen auch Daten über militärische Formationen und/oder Systeme herangezogen werden.

Die bestimmte Bedrohungslage 200 kann verwendet werden um Operationen zur Unterdrückung feindlicher Luftabwehr erfolgreich durchzuführen und/oder um eigene Mittel vor bspw. feindlicher Luftabwehr zu schützen.

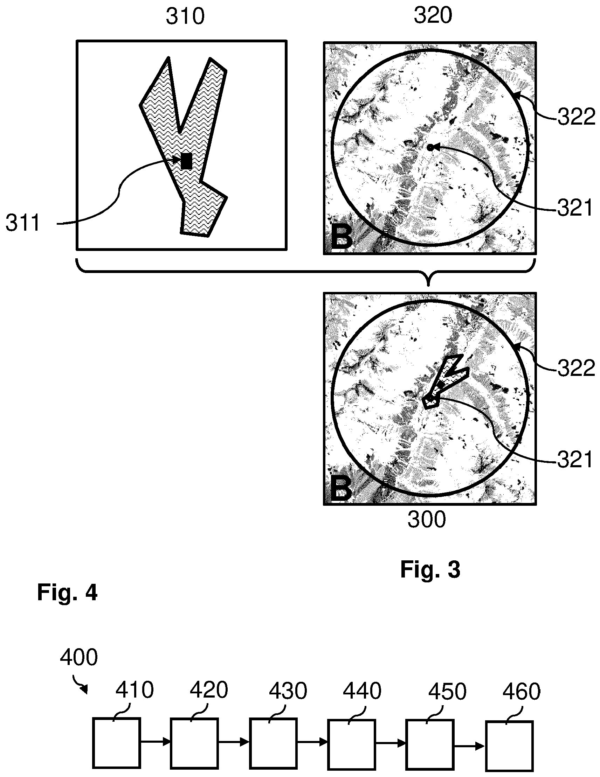

Fig. 3 zeigt eine schematische Darstellung eines Vergleichs 300 einer von einem Sensor erfassten Position einer militärischen Vorrichtung 311 mit der Heatmap 320 für diese militärische Vorrichtung in einem Gebiet B zum Bestimmen einer Plausibilität einer Information, dass sich die Vorrichtung an der von den Sensoren erfassten Position in dem Gebiet B befindet. Das Bezugszeichen 310 bezeichnet hierbei die von dem Sensor erfassten Daten über die Position der Vorrichtung 311 im Gebiet B.

Durch den Vergleich 300 können Attrappen von echten Vorrichtungen unterschieden werden. Beispielsweise kann überprüft werden, ob ein 50 Tonnen schwerer Raketenwerfer auf einem Berg ohne Zufahrtsstraße und mit einer Neigung von 50° positioniert ist und/oder ob eine Fregatte in einem flachen Gewässer mit einer Wassertiefe von drei Metern positioniert ist. Die vorliegende Erfindung stellt ein System bereit, welches in der Lage ist derartige Informationen auf ihre Plausibilität hin automatisch zu prüfen, zumindest teilweise basierend auf geographischen Daten, Daten über Vorrichtungen, Daten über den Aufbau gegnerischer Formationen und/oder Systeme. Es können auch weitere nachrichtendienstliche Daten hinzugezogen und automatisch in die Plausibilitätsprüfung miteinbezogen werden.

Fig. 4 zeigt eine schematische Darstellung eines Verfahrens 400 zur militärischen Aufklärung in einem Gebiet, welches ein Bestimmen einer Bedrohungslage in dem Gebiet basierend auf einer Heatmap ermöglicht.

Das Verfahren 400 umfasst unter 410 ein Erfassen von ersten geographischen Daten über ein erstes Gebiet in dem Gebiet; unter 420 ein Erfassen von ersten Daten über eine militärische Vorrichtung eines ersten Typs; und unter 430 ein Bestimmen einer Verteilung einer Wahrscheinlichkeit die militärische Vorrichtung des ersten Typs an einer Position in dem ersten Gebiet zu finden basierend auf den erfassten Daten (Heatmap 210).

Das Verfahren 400 kann ferner unter 440 ein Erhalten einer Information umfassen, dass eine erste militärische Vorrichtung des ersten Typs an einer bestimmten Position in dem ersten Gebiet sei. Diese Information kann beispielsweise von Daten erhalten werden, die durch einen Sensor einer Drohe oder einen Sensor eines anderen Aufklärungsmittels erfasst werden.

Das Verfahren 400 kann ferner unter 450 ein Bestimmen einer Plausibilität der erhaltenen Information umfassen, basierend auf der Verteilung der Wahrscheinlichkeit die militärische Vorrichtung des ersten Typs an der Position in dem ersten Gebiet zu finden.

Das Verfahren 400 kann ferner unter 460 ein Bestimmen einer Bedrohungslage in dem Gebiet umfassen, basierend auf den erfassten Daten und der bestimmten Plausibilität der erhaltenen Information.

Das Verfahren 400 kann ferner ein Erfassen von zweiten geographischen Daten über ein zweites Gebiet in dem Gebiet umfassen, um eine höhere Präzision der Bedrohungslage zu ermöglichen.

Das Verfahren 400 kann ferner ein Erfassen von zweiten Daten über eine militärische Vorrichtung eines zweiten Typs umfassen, um eine höhere Präzision der Bedrohungslage zu ermöglichen.

Das Verfahren 400 kann ferner ein Bestimmen einer Verteilung einer Wahrscheinlichkeit die militärische Vorrichtung des zweiten Typs an einer Position in dem zweiten Gebiet zu finden basierend auf den erfassten Daten umfassen (Heatmap 220).

Das Verfahren 400 kann ferner ein Erfassen von Daten über eine militärische Formation oder ein militärisches System umfassen, wobei die militärische Vorrichtung des ersten Typs und die militärische Vorrichtung des zweiten Typs Vorrichtungen der militärischen Formation oder des militärischen Systems sind

Das Verfahren 400 kann ferner ein Erhalten einer Information umfassen, dass die militärische Formation oder das militärische System in dem Gebiet sei. Diese Information kann beispielsweise von Daten erhalten werden, die durch einen Sensor einer Drohe oder einen Sensor eines anderen Aufklärungsmittels erfasst werden.

Das Verfahren 400 kann ferner ein Bestimmen einer Plausibilität der erhaltenen Information umfassen, basierend auf der Verteilung der Wahrscheinlichkeit die militärische Vorrichtung des ersten Typs an der Position in dem erstes Gebiet zu finden und basierend auf der Verteilung der Wahrscheinlichkeit die militärische Vorrichtung des zweiten Typs an der Position in dem zweiten Gebiet zu finden; und ein Bestimmen einer Bedrohungslage in dem Gebiet umfassen, basierend auf den erfassten Daten und der bestimmten Plausibilität der erhaltenen Information.

Das Verfahren kann in Form eines Computerprogrammes implementiert sein. Das Computerprogramm kann auf einem nicht-flüchtigen computerlesbaren Speichermedium gespeichert sein. Das Computerprogramm kann auf einem oder auf mehreren Prozessoren eines einzigen oder eines verteilten Systems ausgeführt werden. Das System kann mit einem oder mit mehreren Aufklärungsmitteln und/oder mit einer oder mit mehreren lokalen oder verteilten Daten- oder Informationsquellen gekoppelt sein.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### BEZUGSZEICHENLISTE

- 100: Heatmap / Verteilung der Wahrscheinlichkeit eine militärische Vorrichtung an einer Position in einem Gebiet A zu finden
- 101: Wahrscheinlichste Position der militärischen Vorrichtung in dem Gebiet A
- 102: Einsatzradius oder Wirkungsbereich der militärischen Vorrichtung
- 110: Gewässertiefen in dem Gebiet A
- 120: Steigungen in dem Gebiet A
- 130: Bodenbeschaffenheit in / Zugänglichkeit zu dem Gebiet A
- 200: Bedrohungslage / kombinierte Heatmaps / Verteilung der Wahrscheinlichkeiten militärische Vorrichtungen einer Formation an Positionen in einem Gebiet C zu finden
- 210: Heatmap / Verteilung der Wahrscheinlichkeit eine militärische Vorrichtung an einer Position in einem Gebiet A zu finden
- 211: Wahrscheinlichste Position der militärischen Vorrichtung in dem Gebiet A
- 212: Einsatzradius oder Wirkungsbereich der militärischen Vorrichtung in dem Gebiet A
- 220: Heatmap / Verteilung der Wahrscheinlichkeit eine militärische Vorrichtung an einer Position in einem Gebiet B zu finden
- 221: Wahrscheinlichste Position der militärischen Vorrichtung in dem Gebiet B
- 222: Einsatzradius oder Wirkungsbereich der militärischen Vorrichtung in dem Gebiet B
- 300: Vergleich von einem Sensor erfassten Vorrichtung an einer Position mit der wahrscheinlichsten geographischen Position dieser militärischen Vorrichtung in dem Gebiet B.
- 310: Von dem Sensor erfasste Daten über eine Position der Vorrichtung im Gebiet B
- 311: Vorrichtung an der erfassten Position in dem Gebiet B
- 320: Heatmap / Verteilung der Wahrscheinlichkeit die militärische Vorrichtung an einer Position in einem Gebiet B zu finden
- 321: Wahrscheinlichste Position der militärischen Vorrichtung in dem Gebiet B
- 322: Einsatzradius oder Wirkungsbereich der militärischen Vorrichtung in dem Gebiet B
- 400: Verfahren
- 410-460: Verfahrensschritte

## Patentansprüche

1. Verfahren (400) zur militärischen Aufklärung in einem Gebiet, umfassend:
Erfassen (410) von ersten geographischen Daten über ein erstes Gebiet in dem Gebiet;
Erfassen (420) von ersten Daten über eine militärische Vorrichtung eines ersten Typs; und
Bestimmen (430) einer Verteilung einer Wahrscheinlichkeit, die militärische Vorrichtung des ersten Typs an einer Position in dem ersten Gebiet zu finden, basierend auf den erfassten Daten.

2. Verfahren (400) nach Anspruch 1, ferner umfassend Erhalten (440) einer Information, dass eine erste militärische Vorrichtung des ersten Typs an einer bestimmten Position in dem ersten Gebiet sei.

3. Verfahren (400) nach Anspruch 2, ferner umfassend Bestimmen (450) einer Plausibilität der erhaltenen Information basierend auf der Verteilung der Wahrscheinlichkeit, die militärische Vorrichtung des ersten Typs an der Position in dem ersten Gebiet zu finden.

4. Verfahren (400) nach Anspruch 3, ferner umfassend Bestimmen (460) einer Bedrohungslage in dem Gebiet basierend auf den erfassten Daten und der bestimmten Plausibilität der erhaltenen Information.

5. Verfahren (400) nach Anspruch 1, ferner umfassend Erfassen von zweiten geographischen Daten über ein zweites Gebiet in dem Gebiet.

6. Verfahren (400) nach Anspruch 5, ferner umfassend Erfassen von zweiten Daten über eine militärische Vorrichtung eines zweiten Typs.

7. Verfahren (400) nach Anspruch 6, ferner umfassend Bestimmen einer Verteilung einer Wahrscheinlichkeit, die militärische Vorrichtung des zweiten Typs an einer Position in dem zweiten Gebiet zu finden, basierend auf den erfassten Daten.

8. Verfahren (400) nach Anspruch 7, ferner umfassend Erfassen von Daten über eine militärische Formation oder ein militärisches System, wobei die militärische Vorrichtung des ersten Typs und die militärische Vorrichtung des zweiten Typs Vorrichtungen der militärischen Formation oder des militärischen Systems sind.

9. Verfahren (400) nach Anspruch 8, ferner umfassend:
Erhalten einer Information, dass die militärische Formation oder das militärische System in dem Gebiet sei;
Bestimmen einer Plausibilität der erhaltenen Information basierend auf der Verteilung der Wahrscheinlichkeit, die militärische Vorrichtung des ersten Typs an der Position in dem ersten Gebiet zu finden, und basierend auf der Verteilung der Wahrscheinlichkeit, die militärische Vorrichtung des zweiten Typs an der Position in dem zweiten Gebiet zu finden; und
Bestimmen einer Bedrohungslage in dem Gebiet basierend auf den erfassten Daten und der bestimmten Plausibilität der erhaltenen Information.

10. Nicht-flüchtiges computerlesbares Speichermedium, das einen darauf gespeicherten Programmcode umfasst, welcher, wenn er durch ein System mit einem oder mit mehreren lokalen oder verteilten Prozessoren durchgeführt wird, das System dazu veranlasst das Verfahren nach irgendeinem der Ansprüche 1 bis 9 durchzuführen.
